# EUROPÄISCHE PATENTANMELDUNG

(11) **EP 3 323 584 A1**
(43) Veröffentlichungstag der Anmeldung: **23.05.2018**
(21) Anmeldenummer: 17200067.1
(22) Anmeldetag: 06.11.2017
(51) Int. Cl.: B29C 45/14

(54) **VERFAHREN ZUM HERSTELLEN EINES SPRITZGUSSTEILS UND SPRITZGUSSTEIL**

(30) Priorität: 22.11.2016 EP 16199957
(71) Anmelder: Newfrey LLC, New Britain, CT 06053 (US)
(72) Erfinder: Mansueto, Antoine, 35394 Giessen (DE)
(74) Vertreter: SBD IPAdmin

(57) **Zusammenfassung**

Spritzgussteil (40) mit einem Grundkörper (42) und einem öffnungsverstärkenden hülsenförmigen Einlegeteil (10) und Verfahren zum Herstellen eines Spritzgussteils (40), mit den Schritten:
- Bereitstellen eines hülsenförmige Einlegeteils (10), wobei das Einlegeteil (10) eine innere Mantelfläche und eine äußere Mantelfläche aufweist,
- Bereitstellen einer Spritzgussform;
- Einlegen des Einlegeteils (10) in die Spritzgussform;
- Anbringen des Einlegeteils (10) so dass das Einlegeteil durch die äußere Mantelfläche in die Spritzgussform gehalten ist.

## Beschreibung

### Gebiet der Erfindung

Die vorliegende Erfindung betrifft ein Verfahren zum Herstellen eines Spritzgussteils.

Ferner betrifft die vorliegende Erfindung ein Spritzgussteil mit einem Grundkörper, der eine durch eine innere Wand des Grundkörpers ausgebildete Öffnung aufweist, und einem öffnungsverstärkenden hülsenförmigen Einlegeteil.

### Hintergrund der Erfindung

Derartige Spritzgussteile werden beispielsweise im Automobilbau eingesetzt, da sie einfach zu fertigen sind. Aber solche Spritzgussteile können auch in anderen Bereiche eingesetzt, um beispielsweise eine Öffnung zu verstärken. Zum formschlüssigen Verbinden, beispielsweise Verschrauben, dieser Spritzgussteile mit anderen Komponenten, beispielsweise des Automobils, wie Karosserieblechen oder anderen Komponenten, ist es notwendig, dass ein Einlegeteil beispielsweise aus Metall vorhanden ist. Die Schraubverbindung mit dem Einlegeteil ist hinreichend stabil, wohingegen eine Schraubverbindung ohne Einlegeteil in der Regel die Festigkeitsanforderungen nicht erfüllt. Des Weiteren wird das Drehmoment und/oder die Vorspannkraft einer Schraubverbindung ohne Einlegeteil durch Deformation des Spritzgussteils während dem Verschrauben verringert. Das Einlegeteil, das beispielsweise eine Buchse sein kann, ermöglicht, dem Kriechen des Spritzgussteils entgegenzuwirken.

Zahlreiche Formen und Anordnungen von Spritzgussteilen (bzw. Einlegeteilen) sind heute vorhanden.

Aus DE 72 28 580 U ist ein lochverstärkendes Einlegeteil (oder Buchse) zum Einpressen in eine Bohrung bekannt. Lochverstärkungen werden in der Regel aus einem Metall hergestellt und im Tiefziehverfahren geformt. Dadurch entstehen einstückige Lochverstärkungen, beispielsweise Buchsen, die relativ massiv sind und damit ein hohes Eigengewicht aufweisen. Des Weiteren wird das Einpressen in eine Bohrung entweder manuell oder mit zusätzlichen Verfahrensschritten, nach oder während des Spritzgussverfahrens, was in der Regel die Montagezeit erhöht und die Raumbeanspruchung steigert. Die Anpassung des Einlegeteils an den Grundkörper des Spritzgussteils ist manchmal schwer genau zu erreichen, was mehr Ausschuss bedingt.

Das Dokument DE102010036596 offenbart ein Spritzgussteil mit einem Einlegeteil. Das Einlegeteil ist hohlzylinderförmig und ist am Umfang einer Öffnung angeordnet. Das Einlegeteil begrenzt die Öffnung des Spritzgussteils. Die Anpassung des Einlegeteils an den Grundkörper des Spritzgussteils muss bei solchen Teile sehr genau sein. Insbesondere die Anpassung des Einlegeteils in der Spritzgussform soll sehr genau sein. Wenn das Einlegeteil zu hoch im Spritzwerkzeug ist, wird das Werkzeug an den Kontaktfläche mit dem Einlegeteil sehr belastet. Das Werkzeug schließt nicht richtig und dadurch entstehen Grate am Spritzgussteil. Des Weiteren kann das Spritzmaterial die Trennfläche des Spritzgusswerkzeugs verschmutzen. Wenn das Einlegeteil zu niedrig im Spritzwerkzeug ist, wird Spritzmaterial in die Öffnung vorragen, was das Verschrauben schwierig oder unmöglich macht.

Aus EP2930002A1 ist ein Spritzgussteil mit Einlegeteil bekannt, wobei das Einlegeteil teilweise eine Öffnung ausbildet und demarkiert und teilweise in dem Grundkörper eingebettet ist. Die Öffnung und das Einlegeteil erstrecken sich axial entlang einer Längsachse. Das Ziel einer solchen Anordnung ist die Anpassung des Einlegeteils zu verbessern. Das Spritzgussteil wird jedoch nicht symmetrisch und die Kräfte während dem Verschrauben entlang der Längsachse hängen davon ab welcher Teil des Umfangs der Öffnung in Kontakt mit der Schraube ist.

Der vorliegenden Erfindung liegt daher die Aufgabe zugrunde, ein verbessertes Verfahren zum Herstellen eines Spritzgussteils anzugeben, das schneller und präziser ist. Eine weitere Aufgabe der vorliegenden Erfindung ist es, ein verbessertes Spritzgussteil anzugeben, das vorzugsweise eine bessere Montageflexibilität, ein schnelleres Herstellungsverfahren und eine einfache Montage mit besseren und genaueren Anpassungen an Spritzwerkzeuge ermöglicht. Ferner ist es Aufgabe der vorliegenden Erfindung, ein einfaches Einlegeteil zu benutzen, das auch eine einfache Benutzung ermöglicht.

### Zusammenfassung der Erfindung

Die oben genannte Aufgabe wird gelöst durch ein Verfahren zum Herstellen eines Spritzgussteils mit den Schritten:
- Bereitstellen eines hülsenförmige Einlegeteils, das sich um eine Längsachse erstreckt, wobei das Einlegeteil eine erste Stirnfläche, eine zweite Stirnfläche und eine Ausnehmung aufweist, wobei die Ausnehmung zwischen der erstes und der zweiten Stirnfläche verläuft, wobei das Einlegeteil eine innere Mantelfläche und eine äußere Mantelfläche aufweist, wobei die innere Mantelfläche in Richtung der Ausnehmung zeigt, und wobei die äußere Mantelfläche gegenüber der innere Mantelfläche vorgesehen ist, wobei das Einlegeteil mindestens ein Durchgangsloch aufweist, das sich radial zwischen der äußeren Mantelfläche und der inneren Mantelfläche erstreckt;
- Bereitstellen einer Spritzgussform;
- Einlegen des Einlegeteils in die Spritzgussform;
- Anbringen des Einlegeteils so dass das Einlegeteil durch die äußere Mantelfläche in die Spritzgussform gehalten ist;
- Schließen der Spritzgussform,
- Umspritzen des Einlegeteils mit einem Umspritzmaterial, so dass ein Grundkörper entsteht, wobei das Einlegeteil in dem Grundkörper durch Umspritzen eingebettet ist, wobei der Grundkörper eine durch eine innere Wand ausgebildete Öffnung aufweist, wobei die Öffnung des Grundkörpers in der Ausnehmung angeordnet ist.

Der Begriff "Durchgangloch" soll im weitesten Sinne verstanden werden, d.h. alle Passage, die ein Materialdurchgang erlaubt. In der vorliegender Erfindung kann beispielsweise ein Schlitz oder eine geöffnete Öffnung oder noch eine geschlossene Öffnung als ein Durchgangloch angesehen. Der Abschnitt des Grundkörpers um die Öffnung ist um der Längsachse regelmäßig verteilt und das Spritzgussteil kann ohne weitere Fertigbeabeitung benutzt werden. Ferner ist kein zusätzlicher Schritt während oder nach dem Umspritzen vorhanden, um das Einlegeteil mit dem Grundkörper zu verbinden. Nur die äußere Mantelfläche des Einlegeteils ist in die Spritzgussform gehalten.

In einer besonders bevorzugten Ausführungsform ist die Spritzgussform mit einer Ausbuchtung mit mindestens einer Rille vorgesehen. Das Einlegeteil ist auf die Ausbuchtung angebracht. Das Durchgangsloch ist gegenüber der Rille angeordnet. Der Grundkörper weist eine durch die Rille ausgebildete Versteifungsrippe der Öffnung auf. Die Versteifungsrippe erstreckt sich entlang einer Rippenachse zwischen einem ersten Endstück und einem zweiten Endstück. Das erste Endstück mündet in das Durchgangsloch des Einlegeteils.

Die Spritzgussform enthält die Vorrichtung, um das Einlegeteil zu positionieren und gleichzeitig den Grundkörper herzustellen. Die äußere Mantelfläche des Einlegeteils wird durch die Ausbuchtung gehalten.

In einer besonders bevorzugten Ausführungsform weist das Einlegeteil mehrere Durchgangslöcher auf. Das Einlegeteil ist ein eckig gebogenes Band, wobei jede Kante des Einlegeteils ein Durchgangsloch aufweist. Die Ausbuchtung weist mehrere Rillen auf, um mehrere Versteifungsrippen auf dem Grundkörper auszubilden. Jedes Durchgangsloch ist gegenüber einer Rille in der Spritzgussform angeordnet. Anders gesagt, jede Kante ist durch die Rillen in der Spritzgussform positioniert.

In einer besonders bevorzugten Ausführungsform wird ein Rastelement am Umfang der Öffnung während des Umspritzens des Einlegeteils ausgebildet. Das Rastelement wird direkt mit dem Grundkörper durch Umspritzen hergestellt und ist in den Grundkörper integriert.

Ferner wird die oben genannte Aufgabe bei dem eingangs genannten Spritzgussteil dadurch gelöst, dass das Einlegeteil in dem Grundkörper durch Umspritzen eingebettet ist, wobei die Öffnung des Grundkörpers in der Ausnehmung angeordnet ist, wobei mindestens eine Versteifungsrippe der Öffnung auf dem Grundkörper vorgesehen ist, wobei die Versteifungsrippe sich entlang einer Rippenachse zwischen einem ersten Endstück und einem zweiten Endstück erstreckt, und wobei das erste Endstück in das Durchgangsloch des Einlegeteils mündet.

Das Spritzgussteil erlaubt in gleichmäßiger Weise, dem Kriechen entlang der Längsachse entgegen zu wirken. Die Versteifungsrippe kooperiert mit dem Durchgangsloch des Einlegeteils. Das Einlegeteil kann ziemlich vollständig in dem Grundkörper durch Umspritzen eingebettet sein. Das Einlegeteil wird so durch den Grundkörper stabilisiert. Diese Stabilisierung erlaubt eine Flexibilität bei der Auswahl des Materials des Einlegeteils.

Gemäß einer weiteren bevorzugten Ausführungsform wird das erste Endstück von dem Durchgangsloch versetzt.

Gemäß einer weiteren bevorzugten Ausführungsform weist das Spritzgussteil (bzw. das Einlegeteil) mehrere Durchgangslöcher auf. Die Durchgangslöcher sind regelmäßig um die Längsachse verteilt. Die mehreren Durchgangslöcher erlauben auf einer Seite eine Senkung des Gewichts des Einlegeteils und auf der andere Seite eine bessere Symmetrie und Verteilung während dem Umspritzen. Die mehreren Durchgangslöcher, die während dem Spritzgießen mit dem Kunststoff (oder Spritzmaterial) gefüllt werden, ermöglichen auch eine stabilere Halterung des Einlegeteils im Grundkörper.

In einer bevorzugten Ausführungsform ist das Einlegeteil ein eckig gebogenes Metallband. Jede Kante des Einlegeteils weist ein Durchgangsloch auf. Die Durchgangslöcher erlauben eine Biegung des Einlegeteils mit weniger Kraft.

In einer weiteren bevorzugten Ausführungsform weist der Grundkörper mehrere Versteifungsrippen auf. Jedem Durchgangsloch entspricht eine Versteifungsrippe. Die Versteifungsrippen erlauben eine bessere Verstärkung der Öffnung. Die Anzahl von Versteifungsrippen ist vorzugsweise die gleiche wie die Anzahl von Durchgangslöchern im Einlegeteil.

In einer besonders bevorzugten Ausführungsform ist mindestens ein Rastelement vorgesehen. Das Rastelement ist am Umfang der Öffnung angeordnet. Das Rastelement wird durch Umspritzen ausgebildet.

In einer besonders bevorzugten Ausführungsform ist das Rastelement eine Lasche, die sich in der Öffnung erstreckt. Die Lasche kann beispielsweise ein Spielausgleichelement für einen in der Öffnung eingelegten Schaft sein. Die Lasche kann auch beispielsweise als ein Geräuschunterdrückungselement benutzt werden.

In einer besonders bevorzugten Ausführungsform ist das Rastelement ein Rastfinger, der sich außerhalb der Öffnung erstreckt. Das Rastelement kann für eine Vormontage des Spritzgussteils mit einem anderen Bauteil benutzt werden. Das Rastelement kann in diesem Fall beispielsweise das Bauteil mit dem Spritzgussteil vor oder während der Befestigung der beiden Teile verbinden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine Ansicht eines Einlegeteils eines erfindungsgemäßen Spritzgussteils;
Fig. 2 eine Ansicht des Einlegeteils von Fig. 1 in einer Spritzgussform mit Ausbuchtung und Rillen vor dem Umspritzen des Einlegeteils;
Fig. 3 eine Ansicht eines erfindungsgemäßen Spritzgussteils mit einem Grundkörper und dem Einlegeteil von Fig. 1;
Fig. 4a eine schematische Längsschnittansicht eines erfindungsgemäßen Spritzgussteils mit einem Grundkörper und dem Einlegeteil von Fig. 1;
Fig. 4b eine schematische Längsschnittansicht durch eine weitere Ausführungsform eines erfindungsgemäßen Spritzgussteils mit dem Grundkörper, dem Einlegeteil und zwei Rastelementen;
Fig. 5 eine schematische Längsschnittansicht durch eine weitere Ausführungsform eines erfindungsgemäßen Spritzgussteils mit dem Grundkörper, dem Einlegeteil und zwei Rastelementen, die in der Öffnung des Grundkörpers angeordnet sind;
Fig. 6 eine schematische Längsschnittansicht durch eine weitere Ausführungsform eines erfindungsgemäßen Spritzgussteils mit dem Grundkörper, dem Einlegeteil und vier Rastelementen: zwei, die in der Öffnung des Grundkörpers angeordnet sind und zwei die, aus der Öffnung vorragen.

### Detaillierte Beschreibung bevorzugter Ausführungsformen vorliegender Erfindung

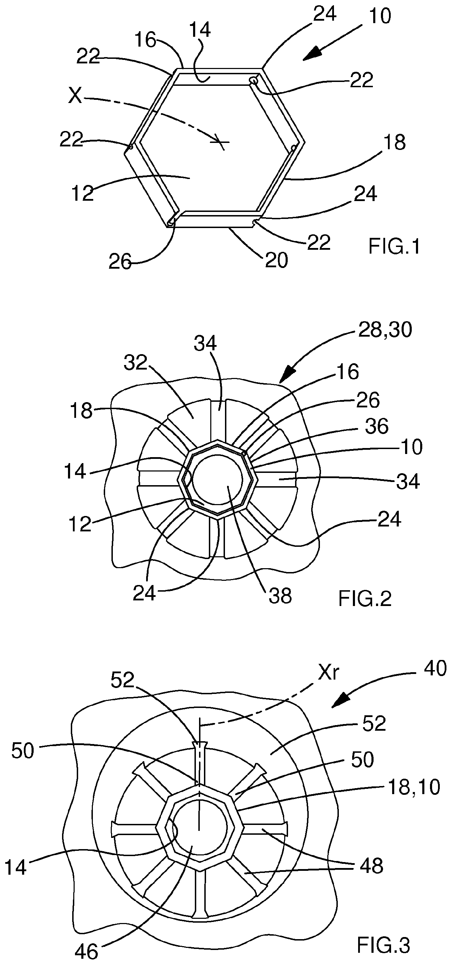

Fig. 1 zeigt ein Einlegeteil 10. Das Einlegeteil 10 ist beispielsweise aus Metall, beispielsweise aus Stahl. In andere Ausführungsform kann das Einlegeteil 10 auch aus anderen Materialien, wie beispielsweise aus Messing, Aluminium, verstärktem Kunststoff, einer metallischen Legierung, usw. sein. Ein Vorteil der vorliegender Erfindung ist dass man nicht an Stahl gebunden ist, was üblicherweise verwendet wird, um das Einlegeteil eine hohe Festigkeit zu verleihen und um eine Positionierung im Werkzeug beispielsweise durch Magnete zu ermöglichen.

Das Einlegeteil 10 ist hülsenförmig und bildet eine Ausnehmung 12 aus. Die Ausnehmung 12 ist beispielsweise ein Hohlraum. Das Einlegeteil 10 ist geeignet um eine Öffnung eines Grundkörpers zu verstärken. Das Einlegeteil 10 weist eine innere und äußere Mantelfläche 14, 16 auf. Die innere Mantelfläche 14 zeigt in Richtung der Ausnehmung 12. Die äußere Mantelfläche 16 liegt gegenüber die innere Mantelfläche 14.

Das Einlegeteil 10 weist eine erste Stirnfläche 18 und eine zweite Stirnfläche 20 auf. Das Einlegeteil 10 erstreckt sich zwischen den beiden Stirnflächen 18, 20 entlang einer Längsachse. Die Ausnehmung 12 verläuft zwischen der ersten und der zweiten Stirnfläche 18, 20. Die Ausnehmung 12 ist vorzugsweise um eine Längsachse X angeordnet. Das Einlegeteil 10 weist einen Querschnitt auf, der vorzugsweise polygonal oder mehreckig ist. Insbesondere ist der Querschnitt des Einlegeteils 10 in einer Ebene orthogonal zur Längsachse X polygonal. In einer anderen Ausführungsform kann der Querschnitt kreisförmig, oval, usw. sein.

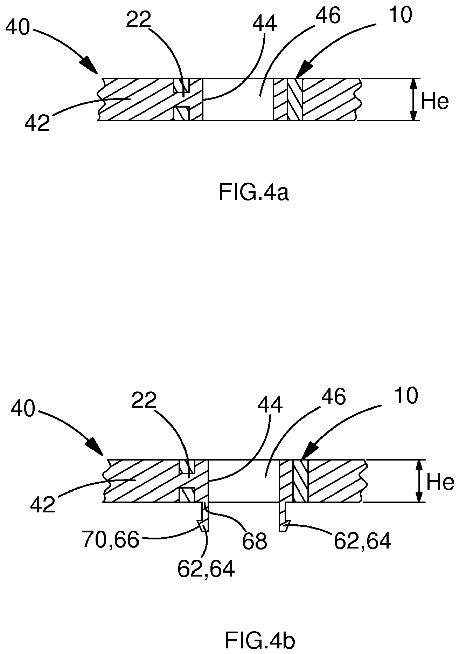

Das Einlegeteil 10 weist entlang der Längsachse X eine Höhe He auf (siehe Fig. 4a).

Das Einlegeteil 10 weist ein Durchgangsloch 22 auf, das sich radial von der äußeren Mantelfläche 16 bis zu der inneren Mantelfläche 14 erstreckt. Vorzugsweise weist das Einlegeteil 10 mehrere Durchgangslöcher 22 auf. Die Durchgangslöcher 22 sind beispielsweise regelmäßig um die Längsachse X verteilt. Die Durchgangslöcher 22 haben einen Durchmesser, der kleiner als die Höhe He des Einlegeteils 10 ist. Beispielsweise ist der Durchmesser der Durchgangslöcher 22 zwischen 0.2 und 0.8-fachen der Höhe He des Einlegeteils 10. Vorzugsweise sind die Durchgangslöcher 22 zentriert zwischen der ersten und der zweiten Stirnfläche 18, 20. In einer anderen Ausführungsform können die Durchgangslöcher 22 entweder näher an der ersten Stirnfläche 18 oder näher an der zweiten Stirnfläche 20 angeordnet sein.

Insbesondere kann der Durchgangslöcher 22 eine gewünschte Position entlang der Längsachse X haben.

Beispielsweise ist das Einlegeteil 10 einstückig. Das Einlegeteil 10 kann aus einem gebogenen Band gebildet sein. Das Band kann ein Metallband sein, aber andere Materialien können auch vorgesehen sein, wie vorher erwähnt. Das Band weist eine erste und eine zweite Endportion auf. Zur Bildung des Einlegeteils 10 wird vorzugsweise ein metallisches Band von einer Rolle abgetrennt. Das Metallband wird danach gebogen und die erste und zweite Endportion werden einander gegenüber angeordnet, um die Ausnehmung 12 auszubilden.

Die Biegebereiche bilden Ecken mit Kanten 24 aus. Die Kanten 24 erstecken sich beispielsweise ziemlich parallel zur Längsachse X zwischen der ersten Stirnfläche 18 und der zweiten Stirnfläche 20. Jede Kante kann ein Durchgangsloch 22 aufweisen. In einer anderen Ausführungsform weisen nur einige Kanten 24 ein Durchgangsloch 22 auf. Die Durchgangslöcher 22 erlauben beispielsweise eine bessere Umformung des Metallbands, um das Einlegeteil 10 zu formen. Deswegen werden die Durchgangslöcher 22 vorzugsweise vor der Verformung des Metallbands hergestellt (beispielweise gestanzt oder gebohrt). Die Biegebereiche sind vorzugsweise wie vorher beschrieben eckig, sie könnten aber auch teilellipsenförmig oder auch teilkreisförmig ausgebildet sein.

Das Einlegeteil 10 weist einen durch die erste und zweite Endportion ausgebildeten Schlitz 26 auf. Dieser Schlitz 26 erstreckt sich im Wesentlichen parallel zur Längsachse X zwischen der ersten Stirnfläche 18 und der zweiten Stirnfläche 20. Der Schlitz 26 ermöglicht eine Flexibilität in der Geometrie des Einlegeteils 10 und einen besseren Toleranzausgleich. Das Einlegeteil 10 bildet somit eine geschlitzte Buchse.

In einer anderen Ausführungsform kann das Einlegeteil 10 aus einem Rohr gebildet sein. Das Rohr wird in Rohrabschnitte geschnitten und jeder Abschnitt bildet ein Einlegeteil 10. In einer anderen Ausführungsform kann das Einlegeteil 10 eine Gitterstruktur aufweisen. Die Löcher im Gitter können die Durchgangslöcher bilden.

Fig. 2 zeigt das Einlegeteil 10 in einer Spritzgussform 28. Die Spritzgussform 28 ist von dem Stand der Technik bekannt und wird daher nicht im Detail beschrieben. Die Spritzgussform 28 ist beispielsweise zwei- oder dreiteilig aufgebaut. Die Spritzgussform 28 weist ein erstes Grundteil 30 auf.

Das Einlegeteil 10 ist in der Spritzgussform 28, beziehungsweise in dem Grundteil 30 angeordnet. Vorzugsweise weist die Spritzgussform 28 (bzw. das erste Grundteil 30) eine Ausbuchtung 32 mit Rillen 34 auf, die das Einlegeteil 10 in der Spritzgussform 28 genau positionieren kann. Die Rillen 34 sind vorzugsweise regelmäßig verteilt und erstrecken sich komplett durch die Ausbuchtung 32.

Die Innenmaße der Ausbuchtung 32 sind Vorzugsweise kleiner als die Außenmaße des Einlegeteils 10. Dadurch weist das Einlegeteil 10 eine Federkraft auf, die beim Stecken und Positionieren in der Spritzgussform 28 hilft. Es sind keine zusätzlichen Elemente oder Ausrüstungen erforderlich.

In einer Ausführungsform kann beispielsweise eine Nut 36 vorgesehen sein. Die Nut ist geeignet, um das Einlegeteil 10 zu empfangen. Die Nut 36 ist kreisförmig und erstreckt sich zwischen der Ausbuchtung 32 und einem zentralen Vorsprung (oder Kern) 38. Der zentrale Vorsprung 38 ist beispielsweise zentriert in Bezug auf die Ausbuchtung 32. Die Nut 36 weist eine Dicke auf, die größer als die Dicke des Einlegeteils 10 ist.

Ein zweites Grundteil ist vorgesehen, um die Spritzgussform 28 zu schließen. Das erste und das zweite Grundteil geben zusammen im geschlossenen Zustand einen geschlossenen Hohlraum, in den Umspritzmaterial (bzw. Spritzmaterial) gespritzt werden kann, um eine Spritzgussteil 40 herzustellen. Das Einlegeteil 10 wird durch die Ausbuchtung gehalten. Die innere Mantelfläche des Einlegeteils zeigt in Richtung des Vorsprungs 38. Das Einlegeteil 10 (bzw. die innere Mantelfläche des Einlegeteils) wird nicht bei dem Vorsprung 38 in der Spritzgussform 28 gehalten. Die innere Mantelfläche ist von Spritzgussformelemente entfernt.

Das Einlegeteil 10 wird in der Spritzgussform 28 von Spritzmaterial umgespritzt. Insbesondere ist das Spritzmaterial Kunststoff. Der Hohlraum bestimmt die Form und die Größe eines Spritzgussteils 40 mit einem Grundkörper 42. Der Grundkörper 42 definiert eine durch eine innere Wand 44 des Grundkörpers 42 ausgebildete Öffnung 46. Das Einlegeteil 10 verstärkt die Öffnung. Der Vorsprung 38 bildet die Öffnung 46. Vor dem Umspritzverfahren ist der Vorsprung 38 in der Ausnehmung 12 des Einlegeteils 10 angeordnet. Der Vorsprung 38 ist vorzugsweise vor dem Umspritzen nicht in Kontakt mit der inneren Mantelfläche 14 des Einlegeteils 10. Insbesondere können das Einlegeteil 10 und der Vorsprung 38 voneinander beabstandet sein. Hiermit wird gewährleistet dass diesen Freiraum Prozesssicher mit Spritzmaterial gefüllt wird.

Fig. 3 und Fig. 4a zeigen das Spritzgussteil 40 mit dem Einlegeteil 10 und dem Grundkörper 42 aus Spritzmaterial (bzw. aus Kunststoff). Das Einlegeteil 10 ist ziemlich vollständig in dem Grundkörper 42 durch Umspritzen eingebettet. Die ersten und zweiten Stirnflächen 18, 20 sind sichtbar, aber ragen nicht, oder nur sehr wenig aus dem Grundkörper 42 vor. Der Grundkörper 42 ist außerhalb der Ausnehmung 12 und in dem Durchgangsloch 22 des Einlegeteils 10 angeordnet. Der Grundkörper 42 ist ferner teilweise in der Ausnehmung 12. Insbesondere wurde durch die Durchgangslöcher 22 in dem Einlegeteil 10 das Spritzmaterial von der äußeren Mantelfläche 16 des Einlegeteils 10 bis zu der inneren Mantelfläche 14 des Einlegeteils 10 durchgeführt. Das Spritzmaterial stabilisiert das Einlegeteil 10. Der Grundkörper 42 in der Ausnehmung 12 des Einlegeteils 10 bildet einen Kranz, der die Öffnung 46 ausbildet. Im Wesentlichen ist der Kranz kontinuierlich. Der Grundkörper 42 umgibt die äußere und die innere Mantelflächen 14, 16 des Einlegeteils 10.

Die Öffnung 46 ist durch die innere Wand 44 des Grundkörpers 42 ausgebildet und die innere Wand 44 des Grundkörpers 42 ist in der Ausnehmung 12 ausgerichtet. Die innere Wand 44 des Grundkörpers 42 erstreckt sich von der ersten Stirnfläche 18 bis zu der zweiten Stirnfläche 20. Die innere Mantelfläche des Einlegeteils 10 ist von außen nicht sichtbar. Der Grundkörper 42 weist beispielsweise eine Versteifungsrippe 48 auf. Wie in Fig. 3 gezeigt, weist der Grundkörper 42 mehrere Versteifungsrippen 48 auf, die um die Öffnung 46 verteilt sind. Die Öffnung 46 ist beispielsweise in einer durch die Ausbuchtung 32 ausgebildete Vertiefung des Grundkörpers 42 angeordnet und die Versteifungsrippen 48 sind in der Vertiefung angeordnet. Die Versteifungsrippen 48 werden beispielsweise durch die Rillen 34 der Spritzgussform 28 ausgebildet. Die Versteifungsrippen 48 erstecken sich jeweils entlang einer Rippenachse Xr zwischen einem ersten Endstück 50 und einem zweiten Endstück 52. Das zweite Endstück 52 mündet in einen Vertiefungsumfang. Das erste Endstück 50 mündet in ein Durchgangsloch 22 des Einlegeteils 10. Das erste Endstück jeder Rippe in ein Durchgangsloch mündet. Beispielsweise weist die Spritzgussform 28 eine Ausbuchtung 32 mit Rillen 34 auf. Die Ausbuchtung 32 mit Rillen 34 bildet die Versteifungsrippen 48 auf dem Grundkörper 42 aus.

Der Grundkörper 42 und eine oder die zwei Stirnflächen 18, 20 des Einlegeteils 10 bilden beispielsweise eine Schraubenkopf- oder Mutterkopf- Kontaktfläche. Die Kontaktfläche 54 erstreckt sich entlang einer Kontaktebene, die vorzugsweise senkrecht zur Längsachse X verläuft. In einer anderen Ausführungsform kann die Kontaktebene nicht senkrecht zur Längsachse X verlaufen.

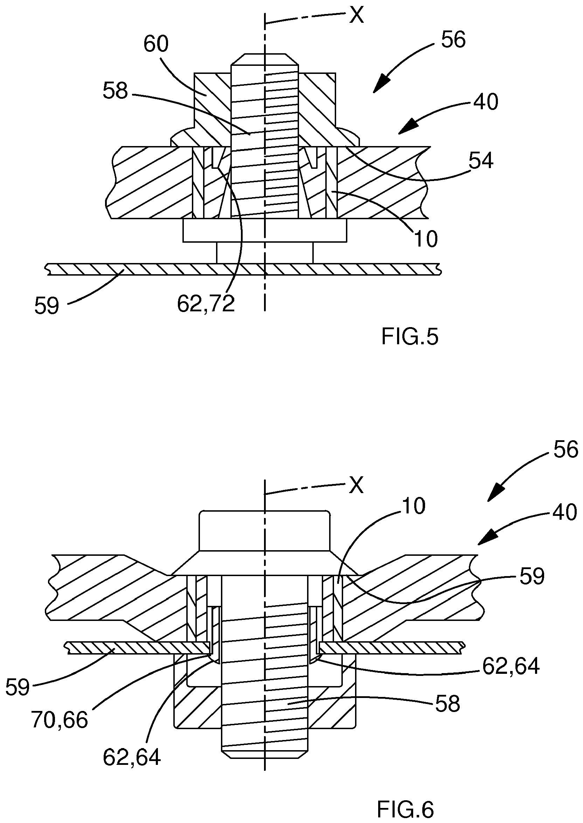

Fig. 4b, Fig. 5 und Fig. 6 zeigen drei verschiedene Ausführungsformen eines Spritzgussteils 40. Fig. 5 und Fig. 6 zeigen ferner zwei verschiedenen Ausführungsformen einer Anordnung 56 mit einem Spritzgussteil 40, einem schaftförmigen Ankerabschnitt 58 und einem mit dem Spritzgussteil 40 durch den Ankerabschnitt 58 verbundenen Werkstück 59.

In Fig. 5 ist der schaftförmige Ankerabschnitt 58 beispielsweise ein Teil eines Bolzens, insbesondere eines Schweißbolzen (es könnte auch ein Einpressbolzen vorgesehen sein). In der Automobilindustrie werden solche Elemente häufig benutzt, um auf Karosserieblechen andere Elemente wie zum Beispiel Befestigungsclips für Kabel, Leitungen etc. zu befestigen. Der Bolzen weist den schaftförmigen Ankerabschnitt und einen Flansch auf. Der Flansch ist auf einem ersten Blech (zum Beispiel einem Karosserieblech) durch Schweißen (eventuell auch durch Kleben) befestigt. Der schaftförmige Ankerabschnitt weist bespielweise ein Gewinde und ist in die Öffnung des Spritzgussteils 40 (bzw. des Grundkörpers 42) eingefügt. Eine Mutter 60 wird zunächst auf das Gewinde des Ankerabschnitts 58 geschraubt, um das Spritzgussteil 40 an dem Karosserieblech zu befestigen. Die Mutter 60 wird auf den Ankeranschnitt 58 geschraubt, bis sie in Kontakt mit der Kontaktfläche 54 kommt.

In Fig. 6 ist der schaftförmige Ankerabschnitt 58 beispielsweise ein Teil einer Schraube und der Schraubenkopf ist in Kontakt mit der Kontaktfläche 54. Insbesondere ist der Schraubenkopf in Kontakt mit einer Stirnfläche des Einlegeteils 10.

Das Einlegeteil 10 verhindert ein Zerdrücken des Grundkörpers 42.

Wie in Fig. 4b, Fig. 5 oder Fig. 6 gezeigt, kann das Spritzgussteil 40 ein Rastelement 62 aufweisen.

Rastelement 62 ist zu verstehen als ein Element, das in eine besondere Richtung vorragt, um mit einer Fläche eines Werkstücks oder Bauteils mindestens teilweise in Kontakt zu kommen.

Das Rastelement 62 wird vorzugsweise während dem Umspritzverfahren mit dem Grundkörper 42 erzeugt. Das Rastelement 62 ist mit dem Grundkörper 42 einstückig gebildet. Anders gesagt ist das Rastelement 62 in den Grundkörper 42 integriert.

Das Rastelement 62 kann als Halterung für eine Vormontage benutzt werden. Diese Elemente erlauben dem Bediener, zwei freie Hände zu haben, um beispielsweise die Verschraubung der Mutter durchzuführen. Solche Elemente verbessern die Ergonomie der Arbeit deutlich und helfen auch die Montagezeit zu reduzieren.

Das Rastelement 62 kann beispielsweise von der Kontaktfläche 54 vorragen, wie in Fig. 4b dargestellt.

Insbesondere ist das Rastelement 62 in Fig. 4b ein Rastfinger 64. Zwei Rastfinger 64 sind vorgesehen, aber in anderen Ausführungsformen können mehr oder weniger Rastfinger 64 vorgesehen sein. Die Rastfinger 64 ragen aus der Kontaktebene vor. Die Rastfinger 64 sind am Umfang der Öffnung angeordnet. Die Rastfinger 64 erstrecken sich in Richtung der Längsachse X. In einer anderen Ausführungsform können die Rastfinger 64 sich entlang einer Achse, der nicht parallel zur Längsachse X ist, sich erstrecken. Der Rastfinger 64 weist eine Erhebung 66 auf. Der Rastfinger 64 erstreckt sich zwischen einer ersten und einer zweiten Endportion 68, 70. Die erste Endportion 68 ist mit dem Grundkörper 42 verbunden. Die zweite Endportion 70 ist eine freie Endportion. Die zweite Endportion 70 weist die Erhebung 66 auf. Die Erhebung 66 ist beispielsweise hackenförmig. Die Erhebung 66 zeigt entweder in Richtung der Längsachse X wie in Fig. 4b dargestellt, oder in die entgegengesetzte Richtung wie in Fig. 6 dargestellt. Die Rastfinger 64 können beispielsweise, wie in Fig. 6 gezeigt, eine Vormontage des Spritzgussteils 40 mit einem Werkstück 59 erlauben. Die Rastfinger 64 erlauben beispielsweise ein Einrasten des Spritzgussteils 40 mit dem Werkstück 59 vor das Einschieben und/oder die Verschraubung einer Schraube oder dergleichen und der Befestigung des Werkstücks mit dem Spritzgussteil 40. Die Distanz zwischen der zweiten Endportion 70 und der Kontaktfläche hängt zum Beispiel von der Blechstärke des Werkstücks 59 ab.

Das Rastelement 62 kann beispielsweise in der Öffnung vorgesehen sein. Fig. 5 oder Fig. 6 zeigt zwei Rastelemente 62 in der Öffnung, aber in anderen Ausführungsformen können mehr oder weniger Rastelemente 62 vorgesehen sein. Die Rastelemente 62 können zum Beispiel den Schaft einer Schraube halten, oder auch als eine Halterung für Scheiben oder Muttern vorgesehen sein. Das Rastelement 62 ist beispielsweise in Fig. 5 oder Fig. 6 eine Lasche 72, die ein Spielausgleich für einen in der Öffnung eingelegten Schaft erlaubt. Die Lasche 72 ist beispielsweise elastisch und erstreckt sich schräg von der inneren Wand 44 der Öffnung 46. Mindestens eine Endportion der Lasche 72 ist mit dem Schaft in Kontakt. Insbesondere und wie in Fig. 5 dargestellt, erstreckt sich die Lasche entlang einer Einführrichtung des Schaftes in der Öffnung in Richtung der Längsachse X. Das Zusammenwirken zwischen der freien Endportion der Lasche und dem Schaft (bzw. dem Gewinde des Schaftes wenn der Schaft ein Gewinde aufweist) gewährleistet die Halterung des Schafts in der Öffnung. Ein Monteur kann dann beide Hände für das Verschrauben einer Mutter oder dergleichen benutzen.

Das Rastelement 62 kann auch als Mittel zum Dämpfen von Schwingungen benutzt werden. Ein solches Rastelement kann dann eine Schwingung des Ankerabschnitts oder des Schafts in der Öffnung vermeiden und Lärm und Materialermüdung verhindern.

## Patentansprüche

1. Verfahren zum Herstellen eines Spritzgussteils (40), mit den Schritten:
- Bereitstellen eines hülsenförmige Einlegeteils (10), das sich um eine Längsachse erstreckt, wobei das Einlegeteil (10) eine erste Stirnfläche, eine zweite Stirnfläche und eine Ausnehmung aufweist, wobei die Ausnehmung zwischen der ersten und der zweiten Stirnfläche verläuft, wobei das Einlegeteil (10) eine innere Mantelfläche und eine äußere Mantelfläche aufweist, wobei die innere Mantelfläche in Richtung der Ausnehmung zeigt, und wobei die äußere Mantelfläche gegenüber der innere Mantelfläche vorgesehen ist, wobei das Einlegeteil (10) mindestens ein Durchgangsloch aufweist, das sich radial zwischen der äußeren Mantelfläche und der inneren Mantelfläche erstreckt;
- Bereitstellen einer Spritzgussform;
- Einlegen des Einlegeteils (10) in die Spritzgussform;
- Anbringen des Einlegeteils (10), so dass das Einlegeteil durch die äußere Mantelfläche in die Spritzgussform gehalten ist;
- Schließen der Spritzgussform;
- Umspritzen des Einlegeteils (10) mit einem Umspritzmaterial, so dass ein Grundkörper (42) entsteht, wobei das Einlegeteil (10) in dem Grundkörper (42) durch Umspritzen eingebettet ist, wobei der Grundkörper (42) eine durch eine innere Wand ausgebildete Öffnung (46) aufweist, wobei die Öffnung (46) des Grundkörpers (42) in der Ausnehmung angeordnet ist.

2. Verfahren nach Anspruch 1, wobei die Spritzgussform mit einer Ausbuchtung mit mindestens einer Rille vorgesehen ist, wobei das Einlegeteil auf die Ausbuchtung angebracht ist, wobei das Durchgangsloch gegenüber der Rille angeordnet ist, wobei der Grundkörper (42) eine durch die Rille ausgebildete Versteifungsrippe der Öffnung (46) aufweist, wobei die Versteifungsrippe sich entlang einer Rippenachse zwischen einem ersten Endstück und einem zweiten Endstück erstreckt, und wobei das erste Endstück in das Durchgangsloch des Einlegeteils (10) mündet.

3. Verfahren nach Anspruch 2, wobei das Einlegeteil (10) mehrere Durchgangslöcher aufweist, wobei das Einlegeteil (10) ein eckig gebogenes Band ist, und wobei jede Kante des Einlegeteils (10) ein Durchgangsloch aufweist, wobei die Ausbuchtung mehrere Rillen aufweist, um mehrere Versteifungsrippen auf dem Grundkörper (42) auszubilden, und wobei jedes Durchgangsloch gegenüber einer Rille in der Spritzgussform angeordnet ist.

4. Verfahren nach einem der Ansprüche 1-3, wobei ein Rastelement am Umfang der Öffnung (46) während dem Umspritzen des Einlegeteils (10) ausgebildet wird.

5. Spritzgussteil (40) hergestellt im Verfahren nach einem der Ansprüche 1-4 mit:
- einem Grundkörper (42), der eine durch eine innere Wand des Grundkörpers (42) ausgebildete Öffnung (46) aufweist,
- einem öffnungsverstärkenden hülsenförmigen Einlegeteil (10), das sich um eine Längsachse erstreckt, wobei das Einlegeteil (10) eine erste Stirnfläche, eine zweite Stirnfläche und eine Ausnehmung aufweist, wobei die Ausnehmung zwischen der ersten und der zweiten Stirnfläche verläuft, wobei das Einlegeteil (10) eine innere Mantelfläche und eine äußere Mantelfläche aufweist, wobei die innere Mantelfläche in Richtung der Ausnehmung zeigt, und wobei die äußere Mantelfläche gegenüber der inneren Mantelfläche vorgesehen ist, wobei das Einlegeteil (10) mindestens ein Durchgangsloch aufweist, das sich radial zwischen der äußeren Mantelfläche und der inneren Mantelfläche erstreckt,
wobei das Einlegeteil (10) in dem Grundkörper (42) durch Umspritzen eingebettet ist, und wobei die Öffnung (46) des Grundkörpers (42) in der Ausnehmung angeordnet ist.

6. Spritzgussteil (40) nach Anspruch 5, wobei wobei mindestens eine Versteifungsrippe der Öffnung (46) auf dem Grundkörper (42) vorgesehen ist, wobei die Versteifungsrippe sich entlang einer Rippenachse zwischen einem ersten Endstück und einem zweiten Endstück erstreckt, und wobei das erste Endstück in das Durchgangsloch des Einlegeteils (10) mündet.

7. Spritzgussteil (40) nach Anspruch 5 oder 6, wobei das Einlegeteil (10) mehrere Durchgangslöcher (22) aufweist, und wobei die Durchgangslöcher regelmäßig um die Längsachse verteilt sind.

8. Spritzgussteil (40) nach einem der Ansprüche 5-7, wobei das Einlegeteil (10) ein eckig gebogenes Metallband ist, und wobei jede Kante des Einlegeteils (10) ein Durchgangsloch aufweist.

9. Spritzgussteil (40) nach Anspruch 7 oder Anspruch 8, wobei der Grundkörper (42) mehrere Versteifungsrippen (48) aufweist, und wobei jedem Durchgangsloch eine Versteifungsrippe entspricht.

10. Spritzgussteil (40) nach einem der Ansprüche 5-9, wobei mindestens ein Rastelement vorgesehen ist, wobei das Rastelement am Umfang der Öffnung (46) angeordnet ist, und wobei das Rastelement eine Lasche ist, die sich in der Öffnung (46) erstreckt und/oder das Rastelement ein Rastfinger ist, der sich außerhalb der Öffnung (46) erstreckt.
